# FASCICULE DE BREVET EUROPEEN

(11) **EP 0 674 439 B1**
(45) Date de publication et mention de la délivrance du brevet: **16.05.2001**
(21) Numéro de dépôt: 95400553.4
(22) Date de dépôt: 14.03.1995
(51) Int. Cl.: H04N 7/14, H04N 7/15, H04N 7/50

(54) **Procédé de codage et de décodage d'images à format flexible pour systèmes de transmission de données à bas débit**
Bildkodierungs- und -dekodierungsmethode mit flexiblem Format für Übertragungssystem mit niedriger Datenrate
Image coding and decoding method having flexible format for low bit-rate transmission systems

(30) Priorité: 25.03.1994 FR 9403547
(43) Date de publication de la demande: 27.09.1995
(73) Titulaire: THOMSON multimedia, 92648 Boulogne Cédex (FR)
(72) Inventeur: Kerdranvat, Michel, F-92050 Paris La Défense (FR); Moraillon, Jean-Yves, F-92050 Paris La Défense (FR)
(74) Mandataire: Zhang, Jianguo

(56) Documents cités:
- EP-A- 0 314 122
- EP-A- 0 320 828
- DE-A- 2 551 664
- GB-A- 2 219 465
- US-A- 4 949 169
- US-A- 5 062 136
- FUJITSU SCIENTIFIC & TECHNICAL JOURNAL, vol. 28, no. 2, 1992 KAWASAKI, JP, pages 228-240, XP 000312063 K.MATSUDA ET AL. 'Digital Signal Processing Technology for Communications'
- PATENT ABSTRACTS OF JAPAN vol. 10 no. 158 (E-409) ,6 Juin 1986 & JP-A-61 013768 (NIPPON DENKI K.K.) 22 Janvier 1986,
- PATENT ABSTRACTS OF JAPAN vol. 17 no. 511 (E-1432) ,14 Septembre 1993 & JP-A-05 130598 (CANON INC.) 25 Mai 1993,
- PATENT ABSTRACTS OF JAPAN vol. 16 no. 453 (E-1267) ,21 Septembre 1992 & JP-A-04 159890 (MITSUBISHI ELECTRIC CORP.) 3 Juin 1992,
- PATENT ABSTRACTS OF JAPAN vol. 14 no. 175 (E-914) ,6 Avril 1990 & JP-A-02 027889 (MITSUBISHI ELECTRIC CORP.) 30 Janvier 1990,

## Description

L'invention se rapporte à un procédé de codage et de décodage d'images à format flexible pour systèmes de transmission de données à bas débit. L'invention s'applique notamment dans le domaine du visiophone.

La norme internationale CCITT H.261 donne les spécifications d'un codeur-décodeur de signaux vidéo pour services audiovisuels avec un débit de données de px64 Kbit/s. Cette norme prescrit notamment un format d'images sources appelé QFIC ("QCIF" en terminologie anglo-saxonne). Ce format correspond à une résolution de 144 lignes par 176 pixels. Pour diminuer le débit des données à transmettre, on procède à une compression des données basée sur l'estimation de mouvement d'une image à l'autre, au passage dans le domaine fréquentiel grâce à une transformée en cosinus discrète (DCT), à la quantification des coefficients fréquentiels et à leur codage suivant un code à longueur variable.

La transformée DCT est appliquée à des blocs de 8 pixels par 8 pixels, tandis que pour l'estimation de mouvement et la transmission, on regroupe quatre blocs adjacents en un macrobloc. Ainsi, une image au format QFIC comporte verticalement 9 macroblocs et horizontalement 11 macroblocs.

Or, il existe sur le marché, des visiophones utilisant d'autres formats d'images. On citera notamment les formats de 112 lignes par 128 pixels et de 96 lignes par 128 pixels, formats respectivement désignés dans ce qui suit par les sigles QCTX et MVTS.

Le document EP-A-0 320 828 concerne la transmission d'images dans un système de visiophone.

L'invention a pour but de proposer un format de transmission et un traitement des informations au niveau du récepteur et de l'émetteur qui garantisse une compatibilité maximale entre différents formats d'images source, notamment les trois formats QFIC, QCTX et MVTS cités ci-dessus.

L'invention a pour objet un procédé de codage d'images à base de blocs de pixels dans un système de transmission tel que défini en revendication 1.

Selon un mode de réalisation particulier, ledit procédé est mis en oeuvre dans un système comportant au moins deux appareil possédant chacun une fonction d'émission et de réception.

Selon un mode de réalisation particulier, lesdits appareils échangent une information sur les formats d'image qu'il peuvent afficher, le plus petit des formats étant retenu comme format commun pour le codage.

Selon un mode de réalisation particulier, un appareil émetteur ne code que les blocs qu'un appareil récepteur peut effectivement afficher.

Selon un mode de réalisation particulier, la communication entre les appareils se faisaint par l'intermédiaire d'un modem, on prévoit un format d'image plus petit lorsque les modems se mettent en mode de repli.

Selon un mode de réalisation particulier, ledit format d'images pouvant contenir les autres formats est un format ayant des dimensions horizontales et verticales supérieures ou égales aux dimensions correspondantes des autres formats.

L'invention a aussi pour objet un procédé de décodage d'images dans un système de transmission d'images codées grâce à un codage à base de blocs de pixels selon l'une des revendications précédentes, caractérisé en ce que, lorsqu'un appareil récepteur reçoit des images d'un format plus petit que le format qu'il peut afficher, cet appareil n'affiche que les blocs correspondant à ce format inférieur.

Selon un mode de réalisation particulier, les blocs extérieurs à ce format inférieur sont affichés en noir.

Selon un mode de réalisation particulier, ledit procédé comporte l'étape de déduction du format d'origine d'une image transmise par analyse des blocs non codés.

Les appareils qui communiquent utilisent un format de transmission de données commun, bien que les formats des images respectifs de chacun des appareils peuvent ne pas être identiques.

D'autres caractéristiques et avantages de l'invention apparaîtront à travers la description d'exemples de réalisation particuliers et non limitatifs illustrés par les figures jointes parmi lesquelles
- la figure 1 représente le placement des macroblocs d'une image au format QCTX par rapport à une image au format QFIC conformément au mode de réalisation particulier de l'invention,
- la figure 2 représente le placement des macroblocs d'une image au format MVTS par rapport à une image au format QFIC conformément au mode de réalisation particulier de l'invention,

Dans ce qui suit, on suppose que les émetteurs et récepteurs utilisent un procédé de codage et de décodage basé sur un traitement des images par blocs de pixels. La compression des données est effectuée entre autres grâce à une quantification de coefficients fréquentiels obtenus à partir des blocs de pixels, à un codage à longueur variable des coefficients quantifiés, ainsi que grâce à un codage de certains blocs par une prédiction basée sur un procédé de compensation de mouvement. De tels systèmes de compression sont bien connus en soi et ne seront pas décrits plus en détail. Le document H.261 mentionné précédemment donne un exemple d'un tel système.

Bien que par la suite, on fasse référence à une séparation des images à coder en macroblocs, l'invention ne se limite pas à une application à des macroblocs, des blocs de toutes tailles pouvant être utilisés suivant la configuration du système de compression.

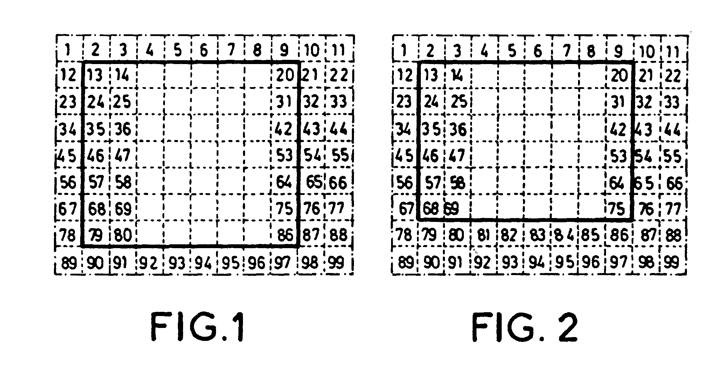

Selon les présents exemples, le format d'image le plus grand (aussi bien horizontalement que verticalement) est le format QFIC de 9 fois 11 macroblocs. Ces macroblocs sont numérotés de 1 à 99 tel qu'illustré par la figure 1.

Selon un premier mode de réalisation, le récepteur est capable de traiter et d'afficher des images au format QFIC, tandis que l'émetteur peut transmettre des images suivant l'un des formats QFIC, MVTS ou QCTX. En début de communication, l'émetteur transmet au récepteur une information définissant le format des images qui vont suivre. Selon le présent exemple, cette information est constituée par un octet dont les quatre bits de poids le plus fort représentent le nombre de macroblocs selon l'horizontale et dont les quatre bits de poids le plus faible représentent le nombre de macroblocs selon la verticale. Lorsqu'on transmet des images au format QCTX, cet octet sera égal à 87H en hexadécimal, tandis que pour le format MVTS, il sera égal à 86H.

La connaissance de cette information permet au décodeur de n'afficher par la suite que les blocs correspondant au format de l'image d'origine. Les autres blocs, laissés "vides" autour de l'image de plus petit format, sont des blocs qui ne seront pas codés par l'émetteur. L'en-tête des macro-blocs non codés comporte une variable indiquant cet état de non-codage.

Les figures 1 et 2 illustrent respectivement les emplacements relatifs des formats QCTX et MVTS par rapport au format QFIC et les correspondances des macroblocs.

Lorsque l'émetteur code des images au format QCTX, il ne code et ne transmet que les 7 fois 8 macroblocs correspondant à ce format. Les macroblocs:
1 à 11, 12, 23, 34, 45, 56, 67, 78, 21, 22, 32, 33, 43, 44, 54, 55, 65, 66, 76, 77, 78, 87, 88 et 89 à 99
ne sont pas codés. Ces macroblocs correspondent à ceux extérieurs au cadre intérieur de la figure 1.

Lorsque l'émetteur code des images au format MVTS, les macroblocs suivants ne sont pas codés:
1 à 11, 12, 21, 22, 23, 32, 33, 34, 43, 44, 45, 54, 55, 56, 65, 66, 67, 76, 77, et 78 à 99.

Cependant, le codage des données pour la transmission est le même que pour une image QFIC, c'est à dire que l'on utilise toujours une numérotation (ou selon une autre terminologie, un adressage) des macroblocs basée sur le format QFIC. Simplement, on décide de ne pas coder les informations relatives aux blocs ci-dessus, ces blocs ne contenant pas d'informations sur l'image.

Le récepteur reconnaît l'information définissant le format des images reçues. La bordure de l'écran correspondant aux blocs non codés est affichée sous la forme d'un cadre noir ou peut éventuellement être utilisée pour afficher des informations destinées à l'utilisateur, concernant par exemple le fonctionnement du récepteur. La partie image active correspondant aux macroblocs transmis est décodée de façon classique et restituée dans la partie écran qui lui est attribuée par la numérotation des macroblocs. L'émetteur peut donc ainsi déterminer la disposition de l'image de format plus petit sur l'écran du récepteur.

Selon une variante du premier exemple de réalisation, l'information concernant le format de l'image transmise est un pointeur qui fait référence à une table mémorisée dans le récepteur et contenant les tailles des formats. Selon une autre variante de réalisation, ladite information est transmise régulièrement pendant la communication.

Selon une autre variante de réalisation, l'information du format de l'image d'origine est déduite au niveau du récepteur en identifiant les blocs véritablement codés dans les données reçues. Par exemple, lorsque les macroblocs codés et reçus par le récepteur définissent une image du format 7 fois 8 macroblocs, ce récepteur en déduit que l'image active à l'intérieur de l'image de format QFIC a un format effectif QCTX. Dans ce but, les formats possibles sont mémorisés dans le récepteur.

L'exemple de réalisation ci-haut concerne la communication d'un émetteur dont les formats d'images sont inférieurs ou égaux à ceux d'un récepteur. Le second exemple concerne la communication bi-directionnelle entre deux appareils émetteurs-récepteurs A et B ayant des formats d'images différents.

Dans ce cas, le format relatif des images est toujours celui illustré par les figures 1 et 2. En début de communication, les deux appareils déterminent lequel des formats d'image va être utilisé pour la transmission.

Dans ce but, chacun des deux appareils envoie une information identifiant le format d'image le plus grand qu'il peut afficher. Chaque appareil compare l'information qu'il reçoit avec l'information qu'il envoie et détermine le plus petit format. C'est ce dernier qui sera utilisé pour la transmission.

On suppose dans ce qui suit que l'appareil A utilise pour l'affichage un format QFIC et que l'appareil B utilise un format QCTX, plus petit que le format QFIC. Le codage effectué par l'appareil B et le décodage effectué par l'appareil A sont similaires au premier exemple de réalisation: l'appareil B code les macroblocs comportant l'information image avec une numérotation telle que celle de la figure 1, tandis que l'appareil A affiche les images reçues également tel qu'illustré par la figure 1, avec un bord noir en lieu et place des macroblocs extérieurs au cadre interne de la figure 1.

Le codage effectué par l'appareil A n'est effectué que pour les macroblocs à l'intérieur du cadre intérieur de la figure 1. Les macroblocs extérieurs à ce cadre ne sont pas codés, malgré le fait qu'ils contiennent une information sur l'image. Cette dernière est donc tronquée, mais le débit de données est ainsi diminué. On évite donc de coder et de transmettre des macro-blocs que le récepteur ne pourra pas afficher.

Selon une variante de ce second exemple de réalisation, le gain de bande passante ainsi obtenu dans au moins un sens de communication est utilisé pour effectuer un codage de meilleure qualité des macro-blocs effectivement codés. Ceci est réalisé en codant plus de macroblocs en mode "intra" ou en diminuant le pas de quantification des coefficients fréquentiels.

Le placement relatif des formats peut bien entendu être différent de celui proposé ci-dessus et défini dans les figures 1 et 2.

L'invention ne se limite pas aux exemples de réalisation ci-dessus. Notamment, elle s'applique en liaison avec les modes de repli de modulateurs-démodulateur ("modems") utilisés pour la transmission. On lie dans ce cas un format d'image à un mode de repli donné. Le format d'image le plus grand est utilisé lorsque la transmission peut s'effectuer dans les meilleures conditions et au débit de données le plus élevé. Si pour une raison ou pour une autre, la liaison vient à se déteriorer, les modems se replient sur un ou plusieurs modes de transmission à débit plus faible (avec, selon une variante, une meilleure protection contre les erreurs de transmission), modes pour lesquels on utilise un format d'image plus petit.

Ceci permet de garantir une même fréquence d'image à des formats d'images différents.

Dans ce qui précède, on a supposé que parmi l'ensembles des formats d'images considérés, il en existe un dont et les dimensions horizontales et les dimensions verticales sont supérieures ou égales aux dimensions des autres formats. En d'autres termes, on a supposé qu'il existe un format pouvant contenir tous les autres formats. Dans le cas où il existe un format ayant la plus grande dimension horizontale en nombre de macroblocs et un second format ayant la plus grande dimension verticale en nombre de macroblocs, on définit selon une variante supplémentaire de l'invention un pseudo-format possédant ces deux plus grandes dimensions. On utilise alors ce format pour définir la numérotation ou les adresses des macroblocs.

Selon une variante de réalisation des deux exemples, lorsqu'un émetteur code une image de plus petit format que le format de plus grandes dimensions, tous les macroblocs n'appartenant pas au plus petit format sont codés comme s'ils contenaient des pixels présentant une grande correlation. Un macrobloc ne contenant que des pixels de même valeur en est un exemple. La transformation vers le domaine fréquentiel n'aura pour résultat qu'un coefficient de composante continue. Tous les autres coefficients seront nuls, minimisant la quantité de données à transmettre. Un récepteur n'aura pas à faire la discrimination entre des macroblocs appartenant à l'image de plus petit format et les autres macroblocs. Il décodera simplement tous les macroblocs qu'il pourra affciher. Cet aspect est particulièrement utile dans des systèmes utilisant des procédés de prédiction, dans lesquels des macroblocs non codés sont remplacés par le récepteur par des macroblocs d'un image précédente, mémorisée dans une mémoire appropriée. Si une telle précaution (ou une discrimination de macroblocs comme expliquée précédemment) n'était pas prise, alors une partie du contenu de cette mémoire serait affiché, quelque soit ce contenu. Même si aucune partie active de l'image transmise n'est occultée, l'utilisateur peut ressentir une gêne.

On notera que l'invention n'est pas limitée par le fait qu'un format de transmission commun est établi entre deux émetteurs-récepteurs pour réduire la quantité de données à transmettre. Les deux émetteurs-récepteurs peuvent transmettre des images sans tenir compte des capacités de l'autre émetteur-récepteur.

En dernier lieu, l'invention peut aisément être mise en oeuvre avec plus de deux émetteurs-récepteurs.

## Revendications

1. Procédé de codage d'images vidéo à base de blocs de pixels, dans un système de transmission dans lequel une image vidéo possède un format d'image parmi une pluralité de formats d'image, ledit procédé étant caractérisé en ce qu'il comporte les étapes :
(a) de division d'un premier format d'image en blocs de pixels, ledit premier format étant tel qu'il puisse de par sa taille contenir les autres formats d'image parmi la pluralité de formats d'image ;
(b) d'assignation d'une adresse à chaque bloc de pixels dudit premier format ;
(c) de codage d'une image initialement d'un autre format que ledit premier format selon ledit premier format en divisant ladite image à coder en blocs de pixels et en assignant à ces derniers des adresses en référence aux adresses assignées aux blocs dudit premier format, de façon à définir le placement relatif des deux formats.

2. Procédé selon la revendication 1, caractérisé en ce qu'il est mis en oeuvre dans un système comportant au moins deux appareils possédant chacun une fonction d'émission et de réception.

3. Procédé selon la revendication 2, caractérisé en ce que lesdits appareils échangent une information sur les formats d'image qu'ils peuvent afficher, le plus petit des formats étant retenu comme format commun pour le codage.

4. Procédé selon l'une des revendications 1 à 3, caractérisé en ce qu'un appareil émetteur ne code que les blocs qu'un appareil récepteur peut effectivement afficher.

5. Procédé selon l'une des revendications 3 ou 4, caractérisé en ce que, la communication entre les appareils se faisant par l'intermédiaire d'un modem, on prévoit un format d'image plus petit lorsque les modems se mettent en mode de repli.

6. Procédé selon l'une des revendications 1 à 5, caractérisé en ce que ledit format d'images pouvant contenir les autres formats est un format ayant des dimensions horizontales et verticales supérieures ou égales aux dimensions correspondantes des autres formats.

7. Procédé de décodage d'images dans un système de transmission d'images codées grâce à un codage à base de blocs de pixels selon l'une des revendications précédentes, caractérisé en ce que, lorsqu'un appareil récepteur reçoit des images d'un format plus petit que le format qu'il peut afficher, cet appareil n'affiche que les blocs correspondant à ce format inférieur.

8. Procédé selon la revendication 7, caractérisé en ce que les blocs extérieurs à ce format inférieur sont affichés en noir.

9. Procédé selon la revendication 7, caractérisé en ce que ledit procédé comporte l'étape de déduction du format d'origine d'une image transmise par analyse des blocs non codés.

## Patentansprüche

1. Verfahren zur Kodierung von Videobildern auf der Basis von Pixelblöcken in einem Übertragungssystem, in dem ein Videobild ein Bildformat unter mehreren Bildformaten aufweist, gekennzeichnet durch folgende Schritte:
(a) Aufteilung eines ersten Bildformats in Pixelblöcke, wobei das erste Format derart ausgebildet ist, daß es über seine Größe hinaus die anderen Bildformate unter den mehreren Bildformaten enthalten kann,
(b) Zuordnung einer Adresse zu jedem Pixelblock des ersten Formats,
(c) zunächst Kodierung eines Bildes eines anderen Formats als das erste Format gemäß dem ersten Format unter Aufteilung des zu kodierenden Bildes in Pixelblöcke und Zuordnung von Referenzadressen für die den Blöcken des ersten Formats zugeordneten Adressen zu den letztgenannten, derart, daß die relative Lage der beiden Formate bestimmt wird.

2. Verfahren nach Anspruch 1, dadurch gekennzeichnet, daß es in einem System ausgeführt wird, das wenigstens zwei Geräte enthält, von denen jedes eine Sendefunktion und eine Empfangsfunktion aufweist.

3. Verfahren nach Anspruch 2, dadurch gekennzeichnet, daß die Geräte eine Information über die Bildformate austauschen, die sie darstellen können, und daß das kleinste Format als gemeinsames Format für die Kodierung beibehalten wird.

4. Verfahren nach einem der Ansprüche 1 bis 3, dadurch gekennzeichnet, daß ein Sendegerät nur die Blöcke kodiert, die ein Empfangsgerät tatsächlich darstellen kann.

5. Verfahren nach einem der Ansprüche 3 oder 4, dadurch gekennzeichnet, daß dann, wenn die Kommunikation zwischen den Geräten über ein Modem erfolgt, ein kleineres Bildformat vorgesehen wird, wenn sich die Modems im Antwortmodus befinden.

6. Verfahren nach einem der Ansprüche 1 bis 5, dadurch gekennzeichnet, daß das genannte Bildformat, das die anderen Formate enthalten kann, ein Format mit horizontalen und vertikalen Abmessungen aufweist, die größer oder gleich den den anderen Formaten entsprechenden Abmessungen sind.

7. Verfahren zur Kodierung von Bildern in einem System zur Übertragung von kodierten Bildern durch eine Kodierung auf der Basis von Pixelblöcken nach einem der vorangehenden Ansprüche, dadurch gekennzeichnet, daß dann, wenn ein Empfangsgerät Bilder eines Formates empfängt, das kleiner als das Format ist, das es darstellen kann, dieses Gerät nur die dem kleineren Format entsprechenden Blöcke darstellt.

8. Verfahren nach Anspruch 7, dadurch gekennzeichnet, daß die äußeren Blöcke bei dem kleineren Format in schwarz dargestellt werden.

9. Verfahren nach Anspruch 7, dadurch gekennzeichnet, daß das Verfahren den Schritt der Ableitung des Ursprungsformats eines Bildes enthält, das durch eine Analyse von nicht-kodierten Blöcken übertragen wird.

## Claims

1. Process for coding video images on the basis of pixel blocks, in a transmission system in which a video image possesses an image format from among a plurality of image formats, the said process being characterized in that it comprises the steps:
(a) of dividing a first image format into blocks of pixels, the said first format being such that it is able by dint of its size to contain the other image formats from among the plurality of image formats;
(b) of assigning an address to each block of pixels of the said format;
(c) of coding an image initially of a format other than the said first format according to the said first format by dividing the said image to be coded into blocks of pixels and by assigning them addresses with reference to the addresses assigned to the blocks of the said first format, in such a way as to define the relative location of the two formats.

2. Process according to Claim 1, characterized in that it is implemented in a system comprising at least two apparatuses each possessing a transmission and reception function.

3. Process according to Claim 2, characterized in that the said apparatuses exchange a cue about the image formats which they can display, the smallest of the formats being adopted as common format for the coding.

4. Process according to one of Claims 1 to 3, characterized in that a transmitter apparatus codes only the blocks that a receiver apparatus can actually display.

5. Process according to one of Claims 3 or 4, characterized in that, the communication between the apparatuses being effected by way of a modem, a smaller image format is provided when the modems go into fallback mode.

6. Process according to one of Claims 1 to 5, characterized in that the said image format able to contain the other formats is a format having horizontal and vertical dimensions which are greater than or equal to the corresponding dimensions of the other formats.

7. Process for decoding images in a system for transmitting images coded by virtue of a coding based on pixel blocks according to one of the preceding claims, characterized in that, when a receiver apparatus receives images of a smaller format than the format which it can display, this apparatus displays only the blocks corresponding to this lower format.

8. Process according to Claim 7, characterized in that the blocks outside this lower format are displayed in black.

9. Process according to Claim 7, characterized in that the said process comprises the step of deducing the original format from an image transmitted by analysing the uncoded blocks.
